# EUROPEAN PATENT APPLICATION

(11) **EP 4 119 518 A1**
(43) Date of publication of application: **18.01.2023**
(21) Application number: 21185792.5
(22) Date of filing: 15.07.2021
(51) Int. Cl.: C04B 20/02, C04B 103/12, C04B 103/22

(54) **CARBONATION OF CALCIUM SULFATE CONTAINING MATERIALS**

(71) Applicant: HeidelbergCement AG, 69120 Heidelberg (DE)
(72) Inventor: ZAJAC, Maciej, 69126 Heidelberg (DE); SKOCEK, Jan, 69151 Neckargemünd (DE); BOLTE, Gerd, 69190 Walldorf (DE); BEN HAHA, Mohsen, 69117 Heidelberg (DE)
(74) Representative: Zellentin & Partner mbB Patentanwälte

(57) **Abstract**

Method for sequestering carbon dioxide comprising providing a starting material comprising calcium ions, sulfate and/or sulfite ions, and alkali metal ions with a molar ratio ∑ Alk : ∑SO₃ > 2.00, reacting the starting material with carbon dioxide to obtain a carbonated product comprising calcium carbonate and alkali sulfate as well as use of the obtained product as set regulator or accelerator for cement and/or as minor or main cement component.

## Description

The present invention relates to a method for making calcium sulfate containing waste and by-products useful through sequestering carbon dioxide and providing calcium carbonate with improved mineral composition as cement component and sulfates as set regulator.

Cement industry is struggling with the high CO₂ emissions related to the production of cement clinker. A major part of the CO₂ emissions related to the clinker production originates from the raw materials used, i.e. from limestone. As environmentally friendlier alternatives to limestone do not exist at large enough scale, reduction of the raw material emissions by limestone substitution is not able to solve the problem.

Thus, the only large-scale CO₂ abatement measure is a post-production carbon capture and storage (CCS) or carbon capture and utilization (CCU). Carbon capture technologies such as amine-based CO₂ scrubber, membrane-based gas separation, oxyfuel kiln lines or indirect calcination of limestone are needed for the CCS to work efficiently. Although the storage of CO₂ has several social and technical constraints it is the most promising short-term solution for the cement industry. Nonetheless, the pursuit of alternative solutions is ongoing and a particular focus is on CCU solutions. The CO₂ captured from the cement industry can be used e.g. for the food industry or during oil recovery. However, the volume of CO₂ gas currently used for both applications is significantly lower than the volume of the CO₂ emitted during cement production. Consequently, alternative solutions are needed.

Calcium sulfate is believed to be non-carbonatable. To make the calcium ions in it useful nonetheless, S. Vanderzee and F. Zeman propose in "Recovery and carbonation of 100 % calcium in waste concrete fines: experimental results", J. Cleaner Prod. 174 (2018), 718-727 to leach the Ca²⁺ out of the solid with hydrochloric acid. The leachate is purified by adding alkalinity and then calcium carbonate is precipitated by adding sodium carbonate obtained from sequestration of carbon dioxide in sodium hydroxide. To obtain a closed loop the hydrochloric acid and sodium hydroxide shall be regenerated from sodium chloride through bipolar membrane electrodialysis. Such a process is complicated and requires considerable investment for setting up on an industrial scale. Easier solutions for sequestering carbon dioxide remain to be provided.

It was now surprisingly found that when the carbonation of calcium sulfate containing materials takes place in the presence of a sufficiently high proportion of alkali metal ions to sulfate ions, calcium carbonates are formed while the sulfate ions precipitate as alkali sulfates. The carbonation process is also improved by the presence of the alkali metal ions.

Thus, the mentioned problem is solved by a method for sequestering carbon dioxide comprising providing a starting material containing calcium ions, sulfate and/or sulfite ions, and alkali metal ions with the sum of soluble alkali metal ions in mole being at least twice that of the sulfate ions in mole and reacting the starting material with carbon dioxide to obtain a carbonated product comprising alkali sulfate and calcium carbonate. The problem is also solved by using the obtained calcium carbonate with improved mineral composition as minor or main cement component. The problem is still further solved by using the alkali sulfate as set regulator or activator in cement wherein the calcium carbonate product can remain present or be separated from the alkali sulfate.

Thus, the present invention extends the material basis for direct carbon capture by carbonation of calcium sulfate as well as improves carbonation of waste and by-products containing calcium sulfate. The carbonation of calcium sulfate mixed with alkali metal ions proceeds already at ambient pressure and temperature at sufficient rate enabling its straightforward upscaling to industrial scale. Useful are e.g. a simple bubbling reactor, reactive grinding or similar gas-suspension or gas-solid reactors. As the reaction proceeds fast enough already at a CO₂ concentration of 5 Vol.-% and is robust with respect to gas impurities, the stack gas from cement plants and exhaust gas from other industrial processes can be used directly.

So as to simplify the description the following abbreviations that are usual in the field of cement are used herein: H - H₂O, C - CaO, A - Al₂O₃, F - Fe₂O₃, M - MgO, N - NaO, K - KO, S - SiO₂ and $ - SO₃. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement is used to designate a material that, after mixing with water to form a paste, is able to develop mechanical strength by hydraulic reaction. Thus, cement denotes a clinker ground with or without further components, and other mixtures like super sulphated cement, geopolymer binder, and dicalcium silicate cement obtained by hydrothermal treatment. The term hydraulic building material denotes mixtures comprising cement and water or another liquid and typically also aggregate as well as optionally admixtures and/or additives. The fresh, unreacted suspension is also called paste. The hardened material is often, but not necessarily as in the case of mortar, a building element.

A supplementary cementitious material (SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

According to the invention, carbon dioxide is sequestered by calcium sulfate in the presence of alkali metal ions with a molar ratio of the sum of soluble alkali metal ions (abbreviated Σ Alk) being higher than twice the sum of sulfate or sulfite ions (abbreviated Σ SO₃).The obtained product comprises calcium carbonate, which is useful as minor or main cement component, especially as SCM or filler, and alkali sulfate, which is useful as set regulator in cement.

The starting material is usually provided by mixing a material comprising calcium sulfate and a material comprising alkali metal ions. Using waste and by-products to provide the starting material is especially advantageous and preferred according to the invention. In particular, the starting material mainly or even only comprises waste and by-products. Of course, small amounts of "pure" materials can be added to adjust the amounts of alkali metal ions or also sulfate ions depending on the intended use of the carbonated product. In case one material contains both calcium sulfate and alkali metal ions in suitable amounts this material can be used as sole starting material. Further, it is possible and can be advantageous to mix the starting material from more than one material comprising calcium sulfate and/or from more than one material comprising alkali metal ions.

The material comprising calcium sulfate can be any material comprising relevant amounts of calcium sulfate. Suitable are for example, but not exclusively, gypsum, anhydrite, hemihydrate, phosphogypsum, by-products containing these and mixtures of the aforementioned substances. Alternatively or in addition, waste and by-products such as, but not limited to, waste concrete, slags, red and brown muds, bottom ashes, and their mixtures are useful. Waste concrete designates both fine fractions from concrete recycling comprising substantial amounts of hardened cement paste as well as discarded hydraulic building materials like concrete and mortar and waste from cleaning concreting equipment like washing water.

The important condition for the present invention is that there is a sufficient proportion of soluble alkali metal ions available during carbonation to combine with the sulfate ions contained in the starting material. A molar ratio of Σ Alk : Σ SO₃ of ≥ 2.00 has been found necessary, preferably the ratio Σ Alk : ΣSO₃ ranges from 2.00 to 5.00, more preferred from 2.00 to 4.00, and most preferred from 2.00 to 3.00 .

For use of the carbonated product as set regulator or activator starting materials containing at least 15 wt.-% sulfate and sulfite calculated as calcium sulfate are preferred, especially such that are unsuitable for direct use as sulfate carrier in cement, concrete and other hydraulic building materials. Preferably a material comprising at least 50 wt.-% sulfate and sulfite calculated as calcium sulfate is used.

For a use of the carbonated product as minor or main cement component the amount of sulfate and sulfite in the starting material may be lower, e.g. from 0.1 % to 25 %, preferably from 1 to 15 %, calculated as calcium sulfate. Nonetheless, in contrast to a carbonation of the same material without the alkali metal ions the sequestration of carbon dioxide is enhanced. The mineral composition of the carbonated product can also be improved by separating the marginally water soluble calcium carbonate from the readily soluble alkali sulfates. Consequently, the concentration of the alkali sulfate in the separated dry products should be less than 75 wt.-%, preferably less than 50 wt.-%, most preferred less than 25 wt.-%, of the total alkali sulfate content in solution plus the dry product.

The material comprising alkali metal ions must contain soluble alkali metal ions. Preferably it also comprises alkali earth metal ions. The material comprising alkali metal ions is preferably a waste or by-product. Dusts collected during cement and clinker production such as bypass dusts, clinker kiln dust, air-pollution control dust such as e.g. dusts from electro-static precipitator (ESP) or bag filter dust are especially suitable. Alkali-rich waste and by-products from other industries being liquid or solid materials, such as paper ash, wood and biomass ashes, are also suitable. In this case, it may be beneficial to add a separate source of soluble alkali metal ions, such as NaOH, KOH, LiOH, NaO, Na₂CO₃, NaHCO₃, etc. Preferably, materials like paper ash, wood and biomass ashes are used in mixture with dusts collected during cement and clinker production. These materials are suitable when their amount of Σ Alk is higher than 5 wt.-%, preferably higher than 10 wt.-%, and most preferred higher than 15 wt.-%.

As mentioned before, the starting material can also be obtained from materials comprising both calcium sulfate and alkali metal ions. The desired ratio can then be adjusted by mixing different waste and/or by-products as well as by adding - preferably small - amounts of calcium sulfate or alkali metal ions as corrective.

It can be advantageous to adjust the ratio Σ Alk : ΣSO₃ in the starting material by adding alkali hydroxides, specifically NaOH, KOH, and/or LiOH, most preferred NaOH and/or KOH. Carbonates, hydrogen carbonates, and oxides are also suitable.

It is to be noted that the pH during carbonation can range from 4 to 12.5, i.e. the pH need not be alkaline. The addition of alkali hydroxides etc. mainly serves to leach the sulfate from the solid calcium sulfate in the starting material in order to produce calcium carbonate. Of course, an alkaline pH is beneficial for carbon dioxide solubility, can enhance the dissolution of phases like silicates, and improve the precipitation of calcium carbonate.

In one embodiment a starting material containing sulphite and/or sulphide is oxidised before carbonation to convert those into sulfate. It is also possible to oxidise the material containing calcium sulfate and/or the material containing alkali metal ions before mixing them to provide the starting material. In case two or more materials containing calcium sulfate and/or materials containing alkali metal ions are used only one of them can be oxidised as well as a mixture of some but not all of them. Oxidation suitably comprises reacting with air or other oxygen or ozone containing gas at a temperature < 100 °C, for example, in a bubbling reactor. Alternatively, the oxidation can be carried out by supplying a suitable oxidizing agent, e.g. H₂O₂, in liquid form into a common mixing reactor.

In case the calcium sulfate source and material comprising alkali metal ions is/are obtained with high particle sizes a separate grinding or co-grinding can be applied to optimize the particle size. Also sieving and/or classifying is possible. Optimal particle sizes range from 0.01 µm to 200 µm. However, it is possible to use materials with higher or lower particle sizes, especially when the carbon dioxide sequestration rate and/or speed allows it or when it is acceptable for the desired use of the carbonated product. Smaller size accelerates the kinetics as known from common chemical reactions. Preferred are sizes < 100 µm, more preferred < 50 µm, as these are good to handle both wet and dry.

Water is needed to allow the dissolution-precipitation reaction sequestering carbon dioxide as carbonate. Thus, the starting material is either provided as or mixed in aqueous suspension or it is reacted in the presence of sufficient relative humidity. Humidity can be provided e.g. by the carbon dioxide and/or by water vapour added separately. Usually a relative humidity from 75 to 100 %, preferably from 95 to 100 % is adjusted. If the reaction is carried out in an aqueous liquid, it is preferable to adjust a water: solids weight ratio from 1 to 100 more preferred from 1.5 to 50, most preferred from 2 to 10. Thus, it is an advantage of the method according to the invention that wet waste and by-products can be used directly without drying. A concentration and/or drying is possible, however.

The reaction can take place in any gas-suspension or gas-solid reactor, e.g. in a simple bubbling reactor or in a mill for reactive grinding, most preferred is a bubbling reactor.

As the reaction proceeds fast enough already with a CO₂ concentration of 5 Vol.-% and is robust with respect to gas impurities, the stack gas from cement plants or exhaust gas from other industrial processes can be used directly. Generally, a carbon dioxide concentration in the range from 1 to 100 Vol.-% is useful, preferred are from 2 to 75 Vol.-%, most preferred from 5 to 50 Vol.-%. It is especially preferred to use an exhaust gas directly, for example, but not exclusively, exhaust gas from a cement kiln, lime kiln, waste incineration, coal fired power plant, gas fired power plant or exhaust gases combined from two or more of them.

Typically, the reaction proceeds at ambient temperature or at a raised temperature resulting from the carbon dioxide used and/or grinding applied. Heating is not necessary, but of course possible. Suitable temperatures for the reaction range from 10 to 250 °C, preferably the temperature ranges from 20 to 90 °C, most preferred from 21 to 80 °C.

It is not desirable to use overpressure, since this has no relevant advantage. However, it is possible to apply raised pressure like 1 to 100 bar overpressure. Preferably the reaction takes place at ambient pressure.

The reaction time needed is controlled by the Σ Alk : ΣSO3. When it is high, CO₂ is added to dissolve more SO₃, when it is low, more input material providing alkali ions is added. Typical equilibrating time without adding anything is 1 to 100 minutes depending on fineness and temperature.

Alternatively, reaction time is adjusted to achieve a carbonation degree of the sulfate and sulfite contained in the starting material ranging from 50 to 100 %, preferably at least 60 %, especially at least 75 %. The carbonation degree can be determined as is known per se, e.g. by thermogravimetry and/or XRD method or by measuring the sulfur concentration in the carbonation solution.

The obtained products are calcium carbonate and alkali sulfate, usually in mixture with remaining starting material and/or side products. Depending on the components of the starting material and the carbonation conditions applied some amount of and/or some of the starting material components will remain in the product. The preferably used waste or by-products typically contain components that are not carbonatable, e.g. aggregate in waste concrete and silica in ashes, which are not converted during carbonation. Further, some calcium sulfate as well as other carbonatable calcium components may remain when the reaction conditions do not allow full carbonation. Last but not least, components apart from the carbonatable calcium components can form other carbonates, e.g. magnesium carbonate, or undergo other chemical reactions in parallel to carbonation. Such further components in the product are often not explicitly mentioned in the following, although they are present under the conditions as described. For the uses according to the invention they are typically no problem.

Usually, when carbonation is carried out in a liquid, a solid product comprising most of the calcium carbonate precipitates and the alkali sulfate substantially remains in the liquid. The solid product precipitates from an aqueous suspension in a gas-suspension reactor on its own or after evaporation of some of the water.

If a gas-solid reactor is used the solid product comprises both calcium carbonate and alkali sulfate. Such product is discharged after sufficient reaction time. The product is highly reactive since alkali sulfates dissolve rapidly in water and hence is suitable for cement production as set regulator and main/minor cement component. Typically, the product comprises:
- precipitated calcium carbonate acting as typical fine limestone filler
- precipitated alkali sulfates acting as reaction activator
- potentially gels from the carbonation reaction
- non reactive components from the starting material.
Based on the source material type, the product can further comprise:
- alkali-aluminium-silica gel provided that the source material contained calcium-silicates and calcium-aluminates
- magnesium carbonate provided that the source materials contained carbonatable compounds with magnesium.

These materials are characterized by high specific surface area promoting the very early reactivity of cements. Additionally, the reaction products comprise finely precipitated calcium carbonate, which is known to have a positive effect on early and late strength development of cements.

According to the invention the alkali sulfate comprising product is useful as set regulator or activator for cement. The calcium carbonate comprising product is likewise suitable as set regulator or activator when it also contains alkali sulfate. In addition, the calcium carbonate comprising product is useful as cement component, especially as filler. Further, when the starting material contained silicate or aluminate, in particular calcium silicates or calcium-silicate-hydrate or calcium aluminate hydrate, the calcium carbonate comprising product will comprise pozzolanic silicon or aluminium phases and is suitable as SCM.

The sulfate content of the reaction product renders it useful as set regulator or activator for cements. Thus, it can at least partially replace gypsum, anhydrite and hemi-hydrate or waste materials hitherto used as sulfate carrier. Typically, amounts ranging from 1 to 20 wt.-%, preferably from 2 to 10 wt.-%, with respect to the cement are used. The product is especially suitable as set regulator for cements rich in reactive alumina-phases such as calcined clay cements, which require high solubility of set regulators.

For use of the product as an activator in cement a slurry can be used which is made by combining the fine precipitated calcium carbonate and the liquid rich in alkali sulfate and potentially chloride. Alternatively, the solid material can be separated from the liquid. The liquid can be evaporated to produce alkali sulfate as solid activator. Further, the solid alkali sulfate can be blended with the calcium carbonate to form a solid activator concurrently providing a fine calcium carbonate filler. For this use, the starting material is preferably rich in calcium sulfate, for example cement kiln dust is suitable.

The product is also useful as minor or main component in composite cements. For this it can be advantageous separate the formed alkali sulfates from the calcium carbonate, especially when the starting material contains substantial amounts of calcium sulfate. The fine particle size precipitated calcium carbonate acts as fine filler and also accelerates hydrate formation and reaction of pozzolans due to dissolution of calcium. Therefore, depending on the amount of sulfates present it can form a minor component in amounts like 1 to 5 wt.-% or a main component in amounts like 6 to 35 wt.-% in a composite portland cement. It can also be used in still higher amounts, like up to 50 wt.-% in in the production of the modern composite cements or up to 99 % when producing alkali activated binders.

Still further, as mentioned before, the product can also comprise pozzolanic silicon or aluminium phases and is then useful as SCM. Again, due to the high fineness a precipitated product enables good reactivity and high strength of building materials from composite cements containing it. In contrast to calcium carbonate obtained by carbonation without sufficient alkali metal ions it is easily possible to remove the sulfate and obtain an essentially sulfate free calcium carbonate. For example, carbonation of recycled concrete fines in the presence of alkali metal ions with Σ Alk : Σ SO₃ > 2.00 provides sulfate free carbonated concrete fines with higher amounts of calcium carbonate than carbonation with less or no alkali metal ions.

A cement containing the carbonated product as set regulator or activator and/or as a component can also contain admixtures and/or additives as is known per se. Also known supplementary cementitious materials can be added.

Typical further SCM are slags, especially ground granulated blast furnace slag, and pozzolans such as natural pozzolans like volcanic ashes and glasses, heated natural pozzolans e.g. clay and oil shale and artificial pozzolans like fly ashes, both calcareous and siliceous fly ashes, carbonated recycled concrete fines etc. Also other main cement constituents according to EN 197-1 can be present. Possible amounts of SCM range from a few percent, e.g. 1 wt.-%, to 95 wt.-% or even more. In standardized Portland composite cements usually 5 to 35 or 50 wt.-% SCM are contained, in composite cements 60 to 80 wt.-% and in blast furnace cement 35 to 95 wt.-% latent hydraulic SCM.

Often used admixtures are water reducing agents and plasticizers like for example, but not exclusively, organic compounds with one or more from carboxylate, sulfonate, phosphonate, phosphate or alcohol functional groups. These serve to achieve a good consistency, i.e. flowability, of the paste with a smaller amount of water. Since a decrease of water/cement ratio normally provides an increase of strength, such admixtures are commonly used. Air entraining agents are also able to improve flowability and can be used for this aim or are need for other reasons such as, but not limited to, density modifications, compactability improvements etc. admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides). It is also possible to add admixtures that are designed to modify the rheology properties to control the setting time, i.e. plasticizers and superplasticizers. Those can have a retarding impact as well, e.g. lignosulphonates, polycarboxylic acids, etc. All admixtures are used in the amounts known as such, wherein the amount is adapted to a specific binder and special needs in the known manner.

Usual and useful additives are e.g. fillers, pigments, reinforcing elements, and self-healing agents. Typical fillers are mineral particles like stone dust as well as fibres such as glass, metal and/or polymer fibres. An addition which is also used as supplementary cementitious material is silica fume. All these can be added in the amounts known per se.

The cements containing the product as set regulator and/or component can be used for the same purposes as known Portland cements and composite cements. Thus, they are useful for making concrete, mortar, plaster, screed and other hydraulic building materials. They can also be used to provide construction chemical compositions like tile adhesive. The cements have a performance similar to known pozzolanic cements and a lower environmental footprint.

Suitable cements are Portland cement (OPC), Portland-composite cement, slag cement, pozzolanic cement, and other composite cements according to EN 197-1, calcium sulfoaluminate cement (CSA), calcium aluminate cement (CAC) and other hydraulic cements including lime as well as components providing with the SCM slurry according to the invention not standardized cements like super sulfated cement and geopolymer cement.

Typical hydraulic building materials are made adding water in a water:cement (w/c) weight ratio from 0.1 to 0.8, wherein any contained SCM is included into the cement amount. The w/c ratio is adjusted to use, i.e. for concrete typically from 0.2 to 0.8 is used, while screed and special products usually has from 0.1 to 2.

The known aggregates are useful, e.g. sand, gravel, light weight aggregate, artificial aggregate, recycled aggregate. The aggregates are chosen according to use, such as only sand for mortar and gravel plus sand for concrete. Aggregates are usually added before the mixing water.

Admixtures are typically added together with the mixing water, additives and SCM can be added to the dry cement or during mixing, typically before adding the mixing water or together with or after some of the mixing water.

The hydraulic building material is then used in the known manner, for example but not limited to by placing inside a mould or formwork, pouring or spraying onto a surface, injecting into cracks or recesses. Generally, a cement comprising the solid product obtained by sequestering carbon dioxide according to the invention is useful for construction material systems made by adding water and typically also aggregates as well as optionally additives and/or admixtures. For example, building elements are manufactured by mixing the cement with water and placing the obtained cement paste. Placing typically comprises filling inside a mould or formwork or applying as mortar e.g. onto bricks or inside gaps to be repaired. The term building elements is to be understood broadly herein, denoting any structure obtained by placing a cement paste. Preferred building elements are precast concrete parts and concrete goods. However, the method is also useful to make foundations, walls, ceilings etc. from ready-mix or site-mixed concrete as well as for mortars, like masonry mortar and plaster mortar, for screed and other usual applications of Portland cement. As with Portland cement the further components of the binder paste besides water like aggregate, additives and admixtures are adapted to the specific use.

The main advantages achieved according to the invention are:
- Significant sequestration potential of CO₂, e.g. CO₂ sequestration from cement plant stack
- Simple technological process without pretreatment of gas or reactants
- Readily applicable to any modern cement plant
- Enables valorisation of waste materials into added value products and their direct utilization
- Mineralization of carbon dioxide using a larger variety of feedstock materials not considered until now, especially materials rich in calcium sulfate
- Ability to use exclusively industrial wastes for manufacturing valuable set regulators and cement components like fillers and SCM.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition and is only present in trace amounts or as an impurity. As used herein, unless indicated otherwise, the term "free from" means that a composition does not comprise a particular material, i.e. the composition comprises 0 weight percent of such material.

### Example 1

Two samples of bypass dust and NaOH were used to provide starting materials. The bypass dusts, designated BPD_H and BPD_L, had the oxide composition shown in table 1 which was determined by X-ray fluorescence (XRF). LOI 750 °C designates the loss on ignition at 750 °C. NaOH was technical grade material.

**Table 1**

| | BPD_H | BPD_L |
|---|---|---|
| LOI 750 °C [wt.-%] | 0.7 | 6.14 |
| SiO₂ [wt.-%] | 19.82 | 13.12 |
| Al₂O₃ [wt.-%] | 4.698 | 3.789 |
| TiO₂ [wt.-%] | 0.277 | 0.221 |
| MnO [wt.-%] | 0.03 | 0.027 |
| Fe₂O₃ [wt.-%] | 1.455 | 2.193 |
| CaO [wt.-%] | 59.64 | 47.76 |
| MgO [wt.-%] | 0.888 | 1.24 |
| K₂O [wt.-%] | 5.008 | 10.2 |
| Na₂O [wt.-%] | 0.339 | 0.313 |
| SO₃ [wt.-%] | 4.256 | 9.762 |
| P₂O₅ [wt.-%] | 0.176 | 0.095 |
| PbO [wt.-%] | 0.032 | 0.078 |
| SrO [wt.-%] | 0.208 | 0.212 |
| ZnO [wt.-%] | 0.025 | 0.113 |
| Cl [wt.-%] | 2.522 | 4.131 |

For the carbonation experiments, solutions with either 0.1 mol/l or 0.5 mol/l NaOH in water were prepared, designated 01NH and 05NH, respectively. 15 g bypass dust was added to 150 ml solution after equilibrating the liquid with a gas mixture containing 10 Vol.-% CO₂ in N₂ that bubbled through the liquid. The starting material from bypass dust and NaOH was carbonated 6 hours.

For the solution analysis, the suspension was filtered by pressure-filtration using a 0.2 µm Nylon filter. The gained solution was further analyzed within 2 hours. Concentrations of the elements in the solution were measured using inductively coupled plasma optical emission spectroscopy/mass spectroscopy (ICP-MS Agilent 7800 and ICP-OES Agilent 5110) depending on the element concentration. Solid samples were tested by XRF, TG and FTIR techniques allowing assessment of the phase assemblage. Before the measurements, the solid samples were dried at 40 °C for 24 hours. Table 2 shows the amounts of elements measured in the solutions.

**Table 2**

| | BPD_H + 01NH | BPD_H + 05NH | BPD_L + 01NH | BPD_L + 05NH |
|---|---|---|---|---|
| AI-ICP-OES Solution | 0.1 | 0.0 | 0.4 | 0.0 |
| Ca-ICP-OES Solution | 165.0 | 7.3 | 388.5 | 11.1 |
| Fe-ICP-OES Solution | 0.0 | 0.0 | 0.0 | 0.1 |
| K-ICP-OES Solution | 4317.5 | 4602.5 | 8114.5 | 8710.0 |
| Na-ICP-OES Solution | 2290.0 | 10720.5 | 2391.5 | 9820.0 |
| Mg-ICP-OES Solution | 162.5 | 45.6 | 108.5 | 12.6 |
| S-ICP-OES Solution | 1439.5 | 1730.0 | 2780.0 | 3772.5 |
| Si-ICP-OES Solution | 56.8 | 51.5 | 77.0 | 42.3 |

As can be seen from table 2, significant leaching of sulfate to the solution occurred, confirming that carbonation of calcium sulfate in mixture with alkali metal ions provides dissolved alkali sulfates.

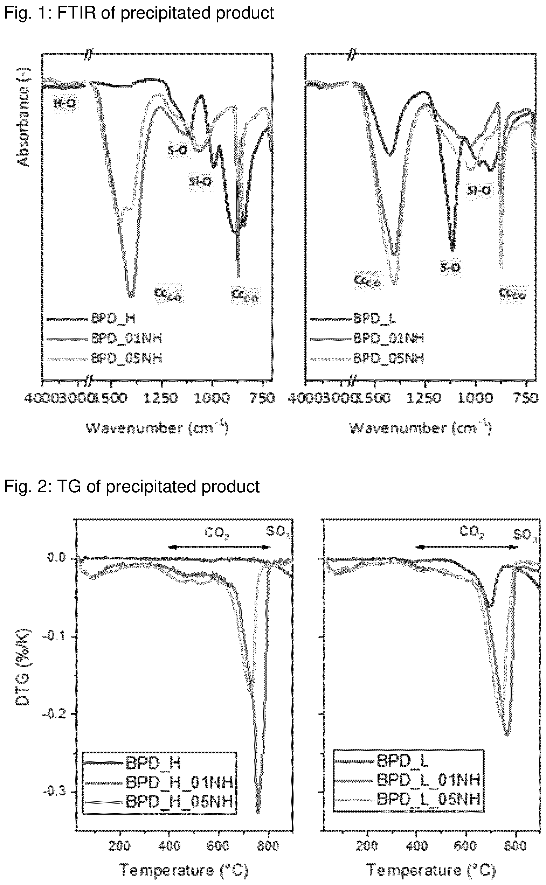

Further, the solid products were analysed with FTIR and TG, the results are shown in figure 1 and figure 2. From figure 1 is readily apparent that bypass dust BPD_H could not be carbonated without added NaOH. For bypass dust BPD_L containing more alkali metal ions some carbonation was achieved. Optimizing the ratio of calcium sulfate to alkali metal ions increased the carbonation degree and amount of sulfate leached into the liquid. The TG data in figure 2 confirm this finding.

### Example 2

Technical grade gypsum and NaOH, Na₂SO₄, or NaOH and Na₂SO₄ were used to provide starting materials. For the carbonation experiments, solutions with 0.1 mol/l, 0.25 mol/l, 0.5 mol/l or 1 mol/l NaOH, with 0.25 mol/l and 0.5 mol/l Na₂SO₄ as well as 0.25 mol/l NaOH and 0.25 mol/l Na₂SO₄ in water were prepared, designated 01NH, 025NH, 05NH, 1NH, 025NS, 05NS, and 025NSNH, respectively. Pure water was used as control. 15 g gypsum was added to 150 ml solution after equilibrating the liquid with a gas mixture containing 10 Vol.-% CO₂ in N₂ that bubbled through the liquid. The starting material from gypsum and NaOH/Na₂SO₄ was carbonated 6 hours.

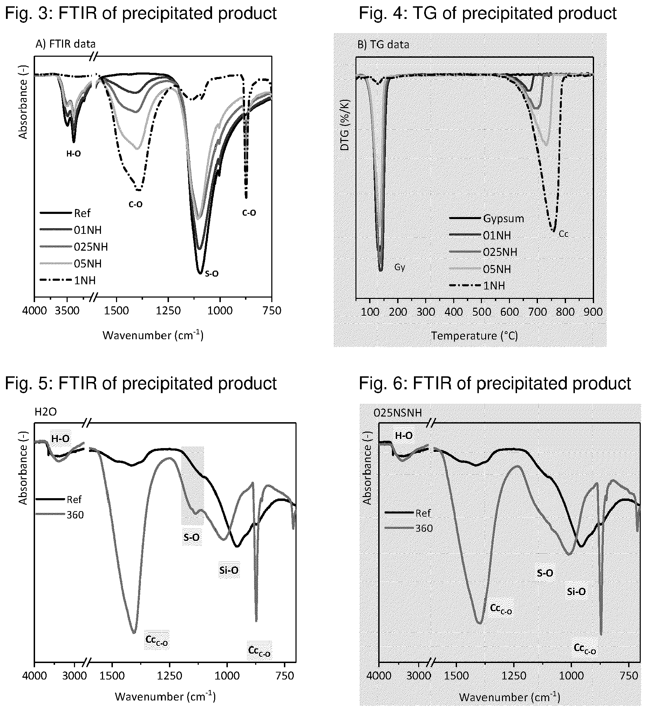

The solid products were examined with FTIR and TG. The results are shown in figures 3 and 4. From figure 3 and 4 it is apparent that for gypsum as calcium sulfate the used amount of alkali metal ions was still not optimal, but the molar ratio of 0.7:1.5 tested was able to convert almost all calcium sulfate into alkali sulfate in a short time and under moderate conditions.

### Example 3

Hardened cement paste made from Portland cement CEM III 42.5 N according to EN 197-1 standard, containing Portland cement clinker, setting time regulator (calcium sulfate), granulated blast furnace slag and a small quantity of limestone, was used. A CEM III cement was used to better simulate industrial RCP, as in many countries (for example the northern part of Europe) where recycling of the concrete is advanced, the supplementary cementitious materials are frequently used for cement and concrete production.

The mineralogical composition of the cement used is given in Table 3.

**Table 3**

| phase | amount [wt.-%] |
|---|---|
| alite | 32.7 |
| belite | 6.1 |
| ferrite | 5.8 |
| calcite | 3.0 |
| anhydrite | 1.5 |
| bassanite | 1.2 |
| slag | 43.0 |
| others | 2.9 |

The cement paste had a w/b = 0.4 and was hydrated sealed at 40 °C for 3 months to mimic well-hydrated cement in mature concrete. After prolonged hydration, the hydration degree of the clinker was about 85 %, while the hydration degree of the slag was 50 % based on Rietveld calculation and SEM image analysis respectively. The main hydrates included C-S-H phase, portlandite, ettringite, hemi- and monocarbonate, hydrotalcite and small amount of hydrogarnet. After hydration, the samples were dried at 105 °C and ground in a laboratory ball mill to a D₉₀ ∼ 100 µm.

This material was used as model for recycled concrete fines and carbonated analogously to bypass dust in example 1 and gypsum in example 2. Five different starting solutions were used:
H₂O = water
01NS = 0.1 M Na₂SO₄ solution
025NS = 0.25 M Na₂SO₄ solution
05NS = 0.5 M Na₂SO₄ solution
025NS025NH = 0.25 M Na₂SO₄ + 0.25 M NaOH solution

The kind and amounts of phases found in the solid products are shown in table 4.

**Table 4**

| | gypsum + H2O | gypsum + 025NS | gypsum + 05NS | gypsum + 025NSNH |
|---|---|---|---|---|
| C$ [wt.-%] | 0.8 | 4.8 | 5.5 | 0.0 |
| Ht [wt.-%] | 3.2 | 2.9 | 2.8 | 3.3 |
| Al-Si-gel [wt.-%] | 19.9 | 19.6 | 21.0 | 21.2 |
| CaCO₃ [wt.-%] | 59.2 | 55.6 | 54.0 | 58.2 |
| C+S [wt.-%] | 16.9 | 17.1 | 16.7 | 17.2 |

As can be seen from table 4, the content of gypsum is depending on the concentrations in the solution.

The solid products were examined with FTIR. The results are shown in figures 5 for the starting material without additional alkali metal ions and in figure 6 for the starting material with 0.25 mol/l NaOH and 0.25 mol/l Na₂SO₄ added in the aqueous suspension for carbonation. As is apparent the alkali metal ions present in the hardened cement paste achieved some conversion of calcium sulfate to alkali sulfate only when total alkalis concentration in the solution is higher than the sulfate . However, carbonization was readily achieved with the addition of alkali metal ions in a molar concentration of 0.5 M NaOH having the ration of alkali / sulfate ions 0.75:0.25.

This proves the advantageous effects on carbon dioxide sequestration and the calcium carbonate product achieved with the present invention by carbonation in the presence of alkali metal ions.

## Claims

1. Method for sequestering carbon dioxide comprising
- providing a starting material comprising calcium ions, sulfate and/or sulfite ions, and alkali metal ions with a molar ratio Σ Alk : ΣSO₃ ≥ 2.00,
- reacting the starting material with carbon dioxide, and
- obtaining a carbonated product comprising calcium carbonate and alkali sulfate.

2. Method according to claim 1, wherein the starting material is obtained from gypsum, anhydrite, hemihydrate, phosphogypsum, waste concrete, slags, red and brown muds, bottom ashes, and mixtures thereof to provide calcium sulfate and from dusts collected during cement and clinker production, especially bypass dust, clinker kiln dust, electro-static precipitator dust, paper ash, wood ash, biomass ash, and mixtures thereof to provide alkali metal ions.

3. Method according to claim 1 or 2, wherein the molar ratio Σ Alk : ΣSO₃ in the starting material ranges from 2.00 to 5.00, preferably from 2.00 to 4.00, most preferred from 2.00 to 3.00.

4. Method according to one of claims 1 to 3, wherein sulfite and/or sulfide present in the starting material is oxidised to sulfate prior to carbonation and/or sulfite and/or sulfide present in a material used to provide the starting material is oxidised to sulfate.

5. Method according to one of claims 1 to 4, wherein a particle size of the starting material and/or a material used to provide the starting material is optimized by grinding or co-grinding and/or classifying, preferably the particle size is adjusted to range from 0.01 µm to 200 µm, preferably to 100 µm, most preferred to 50 µm.

6. Method according to one of claims 1 to 5, wherein exhaust gas from a cement kiln, lime kiln, waste incineration, coal fired power plant, gas fired power plant or exhaust gases combined from two or more of them is used as carbon dioxide.

7. Method according to one of claims 1 to 6, wherein
- the temperature ranges from 10 to 250 °C and/or
- the pressure from ambient to 100 bar overpressure and/or
- the reaction time from 1 to 100 minutes.

8. Method according to one of claims 1 to 7, wherein carbonation is carried out in aqueous suspension, preferably by bubbling the carbon dioxide in gaseous form through the aqueous suspension.

9. Method according to claim 8, wherein a solid product comprising calcium carbonate is separated from the aqueous suspension by precipitation.

10. Method according to one of claims 1 to 7, wherein carbonation is carried out in a gas-solid reactor, preferably a mill.

11. Method according to claim 10, wherein calcium carbonate is separated from alkali sulfate by suspending the carbonated product in water and precipitating the calcium carbonate.

12. Use of a carbonated product comprising calcium carbonate and alkali sulfate obtainable by a method according to one of claims 1 to 11 as set regulator or as cement component.

13. Use according to claim 12, wherein the starting material contains at least 15 wt.-% sulfate and/or sulfite calculated as calcium sulfate to provide a set regulator or activator, preferably at least 50 wt.-%.

14. Use according to claim 12, wherein the starting material contains from 0.1 to 25 wt.-% sulfate and/or sulfite calculated as calcium sulfate, preferably from 1 to 15 wt.-%, and/or the alkali sulfate is removed from the carbonated product for use as minor or main cement component.
